# EUROPEAN PATENT SPECIFICATION

(11) **EP 2 899 901 B1**
(45) Date of publication and mention of the grant of the patent: **01.11.2017**
(21) Application number: 13840098.1
(22) Date of filing: 30.07.2013
(51) Int. Cl.: H04B 7/26, H04L 12/24, H04L 5/00, H04W 76/02, H04W 8/00, H04W 76/04, H04W 72/04, H04W 88/02, H04W 88/08

(54) **METHOD AND DEVICE FOR SENDING SIGNALS AND CONFIGURATION INFORMATION AND FINDING TERMINALS**
VERFAHREN UND VORRICHTUNG ZUM SENDEN VON SIGNALEN UND KONFIGURATIONSINFORMATIONEN SOWIE VOM AUFFINDEN VON ENDGERÄTEN
PROCÉDÉ ET DISPOSITIF POUR LA TRANSMISSION DE SIGNAUX, LA CONFIGURATION D'INFORMATIONS ET LA RECHERCHE DE TERMINAUX

(30) Priority: 18.09.2012 CN 201210348269
(43) Date of publication of application: 29.07.2015
(73) Proprietor: China Academy of Telecommunications Technology, Hai Dian District Beijing 100191 (CN)
(72) Inventor: XU, Fangli, Beijing 100191 (CN); JIAO, Bin, Beijing 100191 (CN); LIU, Jiamin, Beijing 100191 (CN)
(74) Representative: Körfer, Thomas
(86) International application number: PCT/CN2013/080448
(87) International publication number: WO 2014/044081

(56) References cited:
- WO-A1-2011/109941
- WO-A1-2011/116815
- WO-A1-2011/121374
- CN-A- 102 026 307
- CN-A- 102 281 099
- US-A1- 2011 098 043
- US-A1- 2012 163 235

## Description

### Field

The present invention relates to the field of wireless communications and particularly to a method and device for transmitting a signal, a method and device for transmitting configuration information, and a method and device for discovering a UE.

### Background

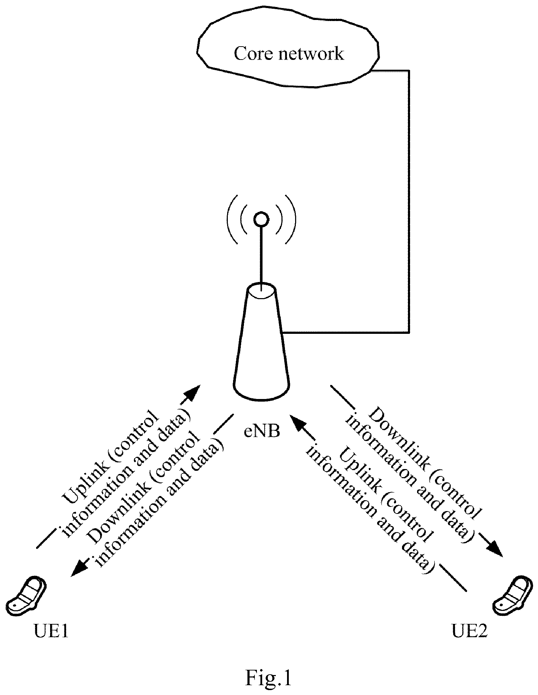

As illustrated in Fig.1, such a network centralized control approach is adopted in a Long Term Evolution (LTE) system that both uplink and downlink data of a User Equipment (UE) is controlled by the network to be transmitted and received. Communication between one UE and another UE is forwarded and controlled by the network. There is no direct communication link between the UE and the other UE, and UE is not allowed to transmit uplink data by itself.

As can be apparent, there has been absent in the prior art a mechanism to discover each other between the UEs, and even communicate directly between the UEs.

US2012/163235A1 discloses a configuring a peer-to-peer (P2P) link in a multi-access wireless network, which includes receiving P2P configuration information from a base station at a UE supporting P2P communication. The first UE communicates directly with a second UE based on the P2P configuration information received from the base station. The first UE may send a configuration request message to the base station, and receive a responsive configuration message with the P2P configuration information from the base station, which messages may be Radio Resource Control messages supporting P2P. In the alternative, the P2P configuration information may be provided in a system information block (SIB) broadcast by the base station. The P2P configuration information may indicate allocation of physical layer or Medium Access Control resources, oe both allocated for P2P communication, and other information.

WO 2011/116815 A1 discloses a resource allocation for direct terminal-to-terminal communication in a cellular system. There are provided measures for resource allocation for direct terminal-to-terminal communication in a cellular system, said measures exemplarily including configuration of common resources for supporting direct communication between terminals across a predefined registration area including one or more cells of a cellular system, and control of an allocation of common resources for enabling direct communication between terminals across the predefined registration area. Said measures may exemplarily be applied for establishing terminal-to-terminal communication in LTE or LTE-Advanced cellular networks.

### Summary

Embodiments of the invention provide a method and device for transmitting a signal, a method and device for transmitting configuration information, and a method and device for discovering a UE so as to address the problem of how to discover each other between UEs.

A method for transmitting a signal includes:
obtaining, by a first UE, transmission resource configuration information of a Device to Device, D2D, signal from a network side after establishing a Radio Resource Control, RRC, connection with the network side; and
transmitting, by the first UE, the D2D signal according to the transmission resource configuration information;
the method further comprises:
if the first UE is switched to a new cell during transmitting a D2D signal and the first UE is idle or connected while transmitting the D2D signal, then judging, by the first UE, whether the new cell belongs to a valid area, where the obtained transmission resource configuration information is applicable, after being switched to the new cell, and if so, then continuing with transmitting the D2D signal according to the transmission resource configuration information; otherwise, stopping the D2D signal from being transmitted; or
if the first UE is switched to a new cell during transmitting a D2D signal and first UE is connected while transmitting the D2D signal, then continuing, by the first UE, with transmitting the D2D signal according to new transmission resource configuration information carried in a handover command received in a handover procedure after being switched to the new cell.

A UE includes:
a configuration information obtaining unit configured to obtain transmission resource configuration information of a Device to Device, D2D, signal from a network side after a Radio Resource Control, RRC, connection is established with the network side; and
a D2D signal transmitting unit configured to transmit the D2D signal according to the transmission resource configuration information;
wherein the D2D signal transmitting unit is further configured:
if the UE is switched to a new cell during transmitting a D2D signal and the UE is idle or connected while transmitting the D2D signal, then to judge whether the new cell belongs to a valid area, where the obtained transmission resource configuration information is applicable, after being switched to the new cell, and if so, then to continue with transmitting the D2D signal according to the transmission resource configuration information; otherwise, to stop the D2D signal from being transmitted; or
if the UE is switched to a new cell during transmitting a D2D signal and UE is connected while transmitting the D2D signal, then to continue with transmitting the D2D signal according to new transmission resource configuration information carried in a handover command received in a handover procedure after being switched to the new cell.

In the solution according to the embodiments of the invention, the first UE transmits a D2D signal according to the transmission resource configuration information, of a D2D signal, obtained from the network side, and the second UE searches for a D2D signal according to the reception resource information, of a D2D signal, obtained from the network side and determines a discovery of the corresponding first UE upon detection of the D2D signal. As can be apparent, in this solution, a UE to be discovered, i.e., the first UE, transmits a D2D signal, a UE needing to discover another UE, i.e., the second UE, discovers the first UE by searching for a D2D signal, which addresses the problem of how to discover each other between the UEs.

### Brief Description of the Drawings

Fig.1 illustrates a schematic diagram of uplink and downlink data transmission in the LTE system in the prior art;
Fig.2 illustrates a schematic diagram of a D2D communication mode according to an embodiment of the invention;
Fig.3 illustrates a schematic flow chart of a method according to an embodiment of the invention;
Fig.4 illustrates a schematic flow chart of a method according to another embodiment of the invention;
Fig.5 illustrates a schematic flow chart of a method according to a further embodiment of the invention;
Fig.6a illustrates a schematic flow chart according to a first embodiment of the invention;
Fig.6b illustrates a schematic flow chart according to a second embodiment of the invention;
Fig.6c illustrates a schematic flow chart according to a third embodiment of the invention;
Fig.6d illustrates a schematic flow chart according to a fourth embodiment of the invention;
Fig.6e illustrates a schematic flow chart in a first approach according to a fifth embodiment of the invention;
Fig.6f illustrates a schematic flow chart in a second approach according to the fifth embodiment of the invention;
Fig.6g illustrates a schematic flow chart in a first approach according to a sixth embodiment of the invention;
Fig.6h illustrates a schematic flow chart in a second approach according to the sixth embodiment of the invention;
Fig.6i illustrates a schematic flow chart in a third approach according to the sixth embodiment of the invention;
Fig.6j illustrates a schematic flow chart in a fourth approach according to the sixth embodiment of the invention;
Fig.6k illustrates a schematic flow chart according to a seventh embodiment of the invention;
Fig.7 illustrates a schematic structural diagram of a UE according to an embodiment of the invention;
Fig.8 illustrates a schematic structural diagram of another UE according to an embodiment of the invention;
Fig.9 illustrates a schematic structural diagram of a base station according to an embodiment of the invention;
Fig.10 illustrates a schematic structural diagram of another UE according to an embodiment of the invention;
Fig.11 illustrates a schematic structural diagram of another UE according to an embodiment of the invention; and
Fig.12 illustrates a schematic structural diagram of another base station according to an embodiment of the invention.

### Detailed Description of the Embodiments

A mechanism to discover each other between mobile devices, and even communicate directly between mobile devices will be introduced in future development of a mobile communication, in order to better satisfy a user demand and improve the efficiency of exchanging information.

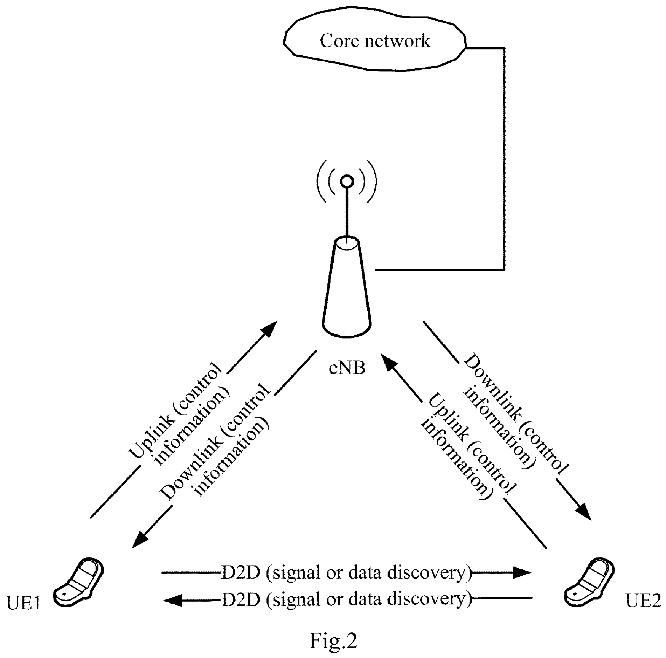

As illustrated in Fig.2, some direction communication is allowed between one UE and another UE in a Device to Device (D2D) communication mode, such direct communication links can be established under the control or assistance by a network. D2D communication between the UE and the other UE is performed based on discovery of a proximate UE.

In order to address the problem of how to discover each other between the UEs, embodiments of the invention provide a method for transmitting a signal and a method for discovering a UE. In these methods, a first UE transmits a D2D signal according to transmission resource configuration information, of a D2D signal, obtained from the network side, and a second UE searches for a D2D signal according to reception resource configuration information, of a D2D signal, obtained from the network side and determines a discovery of the corresponding first UE upon detection of the D2D signal.

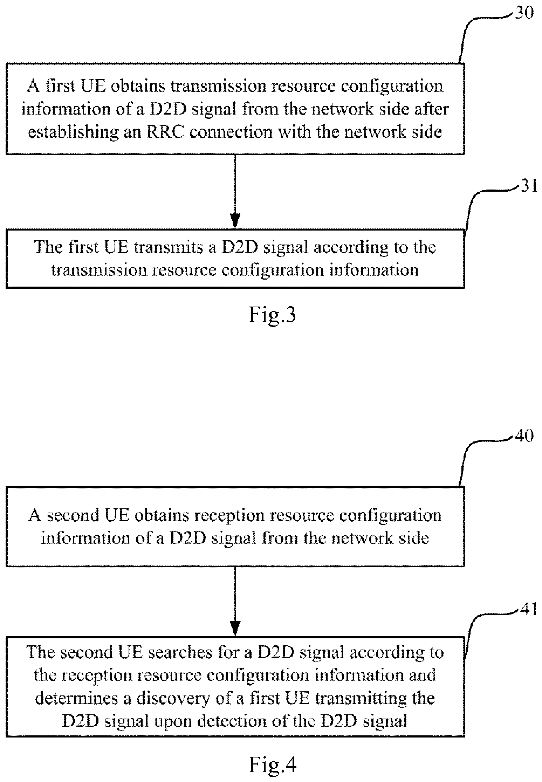

Referring to Fig.3, a method for transmitting a signal according to an embodiment of the invention includes the following operations:
Operation 30, a first UE obtains transmission resource configuration information of a D2D signal from the network side after establishing a Radio Resource Control (RRC) connection with the network side, and the transmission resource configuration information is information related to transmission of a D2D signal; and
Operation 31, the first UE transmits a D2D signal according to the transmission resource configuration information.

Particularly in the operation 30, the first UE can obtain the transmission resource configuration information of a D2D signal from the network side in one of the following two scenarios:

First scenario, the first UE receives the transmission resource configuration information, of a D2D signal, transmitted by the network side (e.g., an eNB) actively in dedicated signaling, the dedicated signaling can be RRC dedicated signaling or Media Access Control (MAC) layer control signaling or physical layer control signaling.

Second scenario, the first UE transmits a D2D signal transmission request to the network side and receives the transmission resource configuration information, of a D2D signal, transmitted by the network side in dedicated signaling.

Particularly the transmission resource configuration information obtained by the first UE can include at least one of: transmission resource location information, a transmit power parameter, a transmission period parameter, a parameter of a number of retransmissions, modulation and coding parameters, and valid range information of configuration information. The transmission resource location information is information indicating resource locations at which a D2D signal is transmitted, including frequency resource location information and/or time resource location information, and if the transmission resource configuration information includes no transmission resource location information, then the first UE can transmit a D2D signal at resource locations predefined with the network side; the transmit power parameter is a parameter related to power at which a D2D signal is transmitted, e.g., maximum transmit power, etc., and if the transmission resource configuration information includes no transmit power parameter, then the first UE can transmit a D2D signal at a transmit power predefined with the network side; the transmission period parameter is a parameter related to a time period at which a D2D signal is transmitted, e.g., the shortest time period, etc., and if the transmission resource configuration information includes no transmission period parameter, then the first UE can transmit a D2D signal at a transmit period predefined with the network side; the parameter of the number of retransmissions is a parameter indicating the number of times that a D2D signal is retransmitted so that the success ratio, at which the D2D signal can be discovered by another UE, can be guaranteed, and if the transmission resource configuration information includes no parameter of the number of retransmissions, then the first UE can transmit a D2D signal at the number of retransmissions predefined with the network side; the modulation and coding parameters are parameters used to modulate and encode the transmitted D2D signal, including a Modulation and Coding Scheme (MCS), etc., and if the transmission resource configuration information includes no modulation and coding parameters, then the first UE can modulate and encode the transmitted D2D signal according to modulation and coding parameters predefined with the network side; and the valid range information of the configuration information is information indicating a valid range in which the current transmission resource configuration information is applicable, including valid area information and/or valid time and other information about the configuration information, and if the transmission resource configuration information includes no valid range information of configuration information, then the first UE can determine a valid range of the current transmission resource configuration information according to valid range information predefined with the network side.

Particularly in the operation 31, the first UE can transmit a D2D signal according to the transmission resource configuration information in one of the following two approaches:
First approach, the first UE generates a D2D signal to be transmitted and transmits the generated D2D signal according to the obtained transmission resource configuration information; and
Second approach, the first UE receives a D2D signal transmitted by the network side and transmits the received D2D signal according to the obtained transmission resource configuration information.

Particularly the D2D signal transmitted by the first UE can include a specific sequence of an air interface and/or a D2D special identifier of the first UE. Preferably the D2D special identifier can include identity information of the first UE and/or service information provided by the first UE. The first UE can transmit the D2D signal in a specific coding scheme or format. Here the specific sequence is a pre-designed sequence including 0 and 1 arranged in a specific order. The specific coding scheme or format can particularly be a 1/3-rate turbo coding scheme, etc.

Furthermore after the first UE obtains the transmission resource configuration information of a D2D signal from the network side, and before the first UE transmits the D2D signal according to the transmission resource configuration information, the first UE can release an RRC connection with the network side.

Preferably after the first UE transmits the D2D signal according to the transmission resource configuration information, the first UE can release the resources over which a D2D signal is transmitted, particularly in one of the following three scenarios:
First scenario, the first UE releases the resources over which a D2D signal is transmitted upon reception of a D2D resource release instruction transmitted actively by the network side; and here before the network side transmits actively the D2D resource release instruction, if the first UE is idle, then the network side needs to initiate an RRC connection setup procedure with the first UE; or
The first UE releases the resources over which a D2D signal is transmitted upon reception of an RRC connection release instruction transmitted actively by the network side (which is applicable to the first UE remaining connected all the time while transmitting the D2D signal);
Second scenario, the first UE transmits a request to the network side to stop the D2D signal from being transmitted and releases the resources over which a D2D signal is transmitted upon reception of a D2D resource release instruction or an RRC connection release instruction transmitted by the network side; and here before the first UE transmits the request to the network side to stop the D2D signal from being transmitted, if the first UE is idle, then the first UE needs to initiate an RRC connection setup procedure with the network side; or
Third scenario, the first UE releases the resources over which a D2D signal is transmitted after a period of time T elapses since the transmission resource configuration information is received, T represents the length of the valid time of the configuration information included in the transmission resource configuration information.

Preferably if the first UE is switched to a new cell during transmitting a D2D signal and the first UE is idle or connected while transmitting the D2D signal, then the first UE judges whether the new cell belongs to the valid area where the obtained transmission resource configuration information is applicable, after being switched to the new cell, and if so, then the first UE continues with transmitting a D2D signal according to the transmission resource configuration information; otherwise, the first UE stops the D2D signal from being transmitted. Here the first UE can judge whether the new cell belongs to the valid area, where the obtained transmission resource configuration information is applicable, according to the valid area information of the configuration information in the transmission resource configuration information; and of course, when the transmission resource configuration information includes no valid area information of the configuration information, the first UE can judge whether the new cell belongs to the valid area, where the obtained transmission resource configuration information is applicable, according to preconfigured valid area information; or

If the first UE is switched to a new cell during transmitting a D2D signal and the first UE is connected while transmitting the D2D signal, then the first UE continues with transmitting a D2D signal according to new transmission resource configuration information carried in a handover command received in the handover procedure after being switched to the new cell.

Furthermore after the first UE stops transmitting the D2D signal, the first UE can transmit an indicator to the network side to indicate stopping transmission of the D2D signal, and first UE release the resources, over which a D2D signal is transmitted, upon reception of the D2D resource release instruction or the RRC connection release instruction transmitted by the network side.

Referring to Fig.4, a method for discovering a UE according to an embodiment of the invention includes the following operations:
Operation 40, a second UE obtains reception resource configuration information of a D2D signal from the network side, the reception resource configuration information is information related to reception of a D2D signal; and
Operation 41, the second UE searches for a D2D signal according to the reception resource configuration information and determines a discovery of a first UE transmitting the D2D signal upon detection of the D2D signal. Here the second UE can determine the discovery of the first UE transmitting the D2D signal upon detection of the D2D signal as follows: if the D2D signal includes a specific sequence of an air interface, then the second UE can determine a UE corresponding to the specific sequence in the detected D2D signal according to a pre-stored correspondence relationship between the sequence of the air interface and the UE, the determined UE is the first UE transmitting the D2D signal; and if the D2D signal includes a D2D special identifier of the first UE, then the second UE can determine that a UE corresponding to the D2D special identifier is the first UE transmitting the D2D signal.

Particularly the second UE can obtain the reception resource configuration information of a D2D signal from the network side as follows:
First, the second UE transmits a D2D signal reception request to the network side and receives the reception resource configuration information, of a D2D signal, transmitted by the network side in dedicated signaling; or
Second, the second UE fetches the reception resource configuration information of a D2D signal from a system broadcast message transmitted by the network side.

Particularly the reception resource configuration information can include at least one of: reception resource location information, modulation and coding parameters, and the valid range information of configuration information. The reception resource location information is information indicating resource locations at which a D2D signal is searched for, including frequency resource location information and/or time resource location information, and if the reception resource configuration information includes no reception resource location information, then the second UE can search for a D2D signal at resource locations predefined with the network side; the modulation and coding parameters are parameters used by the first UE transmitting the D2D signal to modulate and encode the D2D signal, including an MCS, etc., and the second UE demodulates and decodes the detected D2D signal according to the modulation and coding parameters, and if the reception resource configuration information includes no modulation and coding parameters, then the second UE can demodulate and decode the detected D2D signal according to modulation and coding parameters predefined with the network side; and the valid range information of the configuration information is information indicating a valid range in which the current reception resource configuration information is applicable, including valid area information and/or valid time and other information about the configuration information, and if the reception resource configuration information includes no valid range information of configuration information, then the second UE can determine a valid range of the current reception resource configuration information according to valid range information predefined with the network side.

Preferably the second UE fetches related information of the first UE from the detected D2D signal, and/or the second UE transmits an indicator about the detection of the D2D signal of the first UE to the network side, upon determining the discovery of the first UE which transmits the D2D signal. The related information of the first UE includes a D2D special identifier, etc., of the UE, and the D2D special identifier can include identity information of the first UE and/or service information provided by the first UE.

Preferably the second UE can release the resources over which a D2D signal is received upon determining the discovery of the first UE which transmits the D2D signal.

Particularly the second UE can release the resources over which a D2D signal is received in one of the following scenarios:
First scenario, the second UE releases the resources over which a D2D signal is received upon reception of a D2D resource release instruction or an RRC connection release instruction transmitted by the network side actively in dedicated signaling;
Second scenario, the second UE transmits a request to the network side to stop the D2D signal from being received, and releases the resources over which a D2D signal is received upon reception of a D2D resource release instruction or an RRC connection release instruction transmitted by the network side in dedicated signaling;
Third scenario, the second UE releases the resources over which a D2D signal is received upon detecting no reception resource configuration information carried in a system broadcast message; and
Fourth scenario, the second UE releases the resources, over which a D2D signal is received, after a period of time T since the reception resource configuration information is received, T represents the length of a valid time period of the configuration information included in the reception resource configuration information.

In this method, in order to enable the second UE to detect accurately a D2D signal transmitted by the first UE, a set of resources over which the second UE receives a D2D signal is a set of resources, over which a D2D signal is transmitted (i.e., resources over which the first UE transmits a D2D signal), allocated by the network side or a subset thereof. Thus the set of resources, over which a D2D signal is received, indicated by the reception resource configuration information, is a set of resources, over which a D2D signal is transmitted, allocated by the network side or a subset thereof.

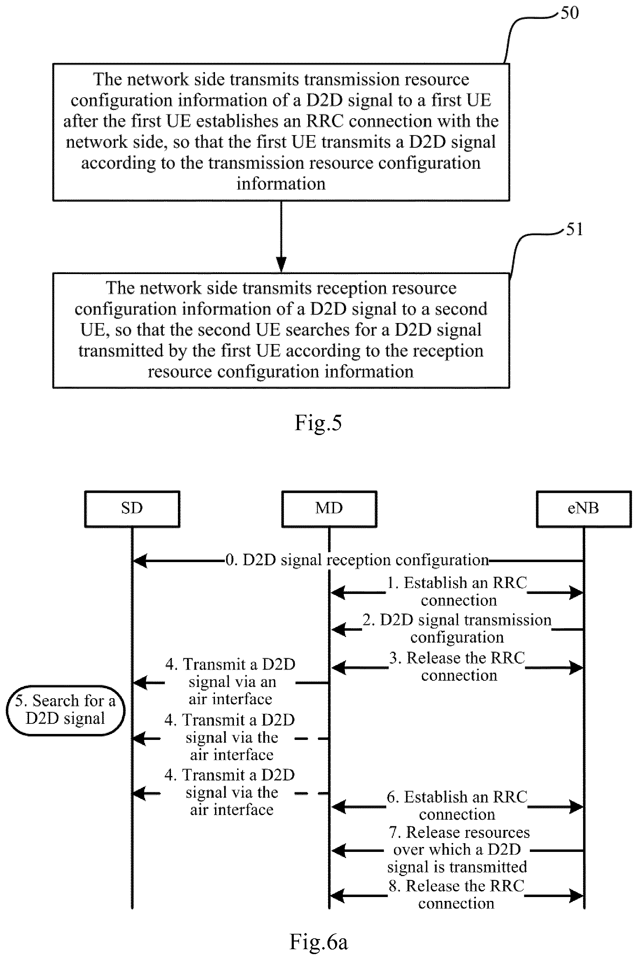

Referring to Fig.5, a method for transmitting configuration information according to an embodiment of the invention includes the following operations:
Operation 50, the network side transmits transmission resource configuration information of a D2D signal to a first UE after the first UE establishes an RRC connection with the network side, so that the first UE transmits a D2D signal according to the transmission resource configuration information; and
Operation 51, the network side transmits reception resource configuration information of a D2D signal to a second UE, so that the second UE searches for a D2D signal transmitted by the first UE according to the reception resource configuration information.

Particularly the network side can transmit the transmission resource configuration information of a D2D signal to the first UE as follows;
The network sides transmits actively the transmission resource configuration information of a D2D signal to the first UE in dedicated signaling; and
The network side transmits the transmission resource configuration information of a D2D signal to the first UE in dedicated signaling upon reception of a D2D signal transmission request transmitted by the first UE.

Particularly the transmission resource configuration information can include at least one of: transmission resource location information, a transmit power parameter, a transmission period parameter, a parameter of a number of retransmissions, modulation and coding parameters, and the valid range information of the configuration information.

Furthermore after transmitting the transmission resource configuration information of a D2D signal to the first UE, the network side further transmits to the first UE a D2D signal to be transmitted by the first UE.

Preferably after the network side transmits the transmission resource configuration information of a D2D signal to the first UE,
The network side transmits actively a D2D resource release instruction or an RRC connection release instruction to the first UE to instruct the first UE to release resources over which a D2D signal is transmitted; or
The network side transmits a D2D resource release instruction or an RRC connection release instruction to the first UE, upon reception of a request transmitted by the first UE to stop the D2D signal from being transmitted, to instruct the first UE to release resources over which a D2D signal is transmitted.

Preferably after the network side transmits the transmission resource configuration information of a D2D signal to the first UE, if the first UE is switched to a new cell and the first UE is currently connected, then the network side transmits new transmission resource configuration information to the first UE in a handover command in the handover procedure of the first UE, so that the first UE continues with transmitting a D2D signal according to the new transmission resource configuration information.

Particularly the network side can transmit the reception resource configuration information of a D2D signal to the second UE as follows:
The network side transmits the reception resource configuration information of a D2D signal to the second UE in dedicated signaling upon reception of a D2D signal reception request transmitted by the second UE; or
The network side transmits the reception resource configuration information of a D2D signal to the second UE in a system broadcast message.

Particularly the reception resource configuration information includes at least one of: reception resource location information, modulation and coding parameters, and valid range information of configuration information.

Preferably after the network side transmits the reception resource configuration information of a D2D signal to the second UE, the network side transmits actively a D2D resource release instruction or an RRC connection release instruction to the second UE in dedicated signaling, to instruct the second UE to release resources over which a D2D signal is received; or
Upon reception of a request transmitted by the second UE to stop the D2D signal from being received, the network side transmits actively a D2D resource release instruction or an RRC connection release instruction to the second UE in dedicated signaling to instruct the second UE to release resources over which a D2D signal is received.

In this method, a set of resources, over which a D2D signal is received, indicated by the reception resource configuration information, is a set of resources, over which a D2D signal is transmitted, allocated by the network side or a subset thereof.

The invention will be described below in connection with particular embodiments thereof.

A UE transmitting a D2D signal will be referred to as a Master Device (MD), and a UE searching for a D2D signal will be referred to as a Slave Device (SD), in the following respective embodiments.

### First Embodiment:

In this embodiment, when the MD transmits a D2D signal, the MD has no RRC connection with the network side, as illustrated in Fig.6a:
Operation 0, an evolved Node B (eNB) transmits reception resource configuration information of a D2D signal to the SD in a system broadcast message, or dedicated signaling, etc., and the SD obtains the reception resource configuration information of a D2D signal in the system broadcast message, or the dedicated signaling, etc.;
Operation 1, an RRC connection is established between MD and the eNB;
Operation 2, the eNB transmits transmission resource configuration information of a D2D signal to the MD in dedicated signaling upon reception of a D2D signal transmission request transmitted by the MD over the RRC connection;
Operation 3, the MD releases the RRC connection with the eNB after obtaining the transmission resource configuration information of a D2D signal;
Operation 4, the MD transmits a D2D signal, i.e., a pilot signal, via an air interface according to the obtained transmission resource configuration information;
Operation 5, the SD searches for a pilot signal according to the reception resource configuration information of a D2D signal, determines a discovery of the MD transmitting the pilot signal upon detection of the pilot signal, and provides information carried by the pilot signal to the application layer for use and presentation;
Operation 6, the MD or the eNB initiates an RRC connection setup procedure and an RRC connection is established between the MD and the eNB;
Operation 7, the eNB transmits a D2D resource release instruction to the MD to instruct the MD to release resources over which a D2D signal is transmitted; and
Operation 8, the MD releases the resources over which a D2D signal is transmitted and releases the RRC connection with the eNB.

### Second Embodiment:

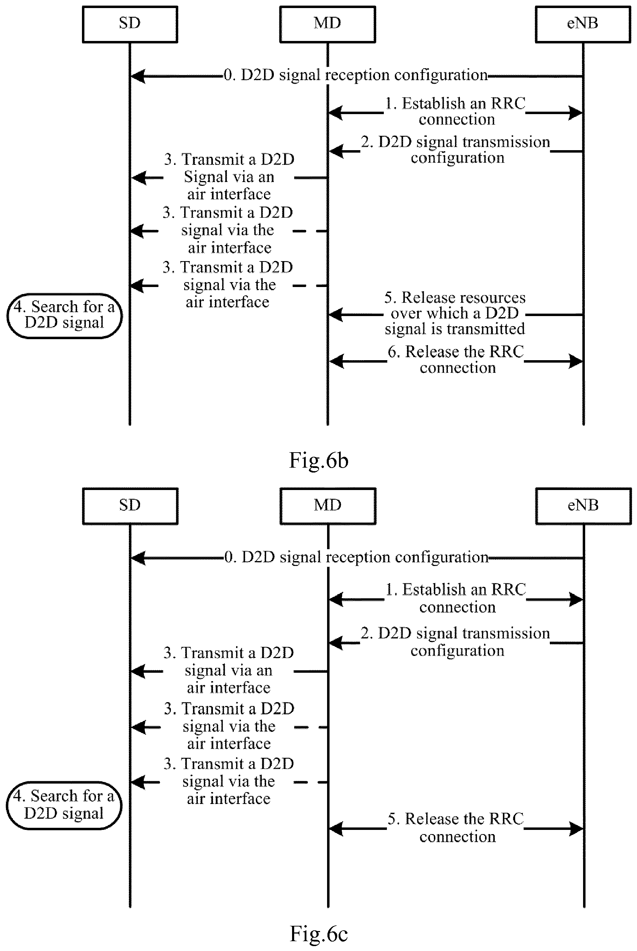

In this embodiment, when an MD transmits a D2D signal, the MD remains an RRC connection with the network side, as illustrated in Fig.6b:
Operation 0, an eNB transmits reception resource configuration information of a D2D signal to the SD in a system broadcast message, or dedicated signaling, etc., and the SD obtains the reception resource configuration information of a D2D signal in the system broadcast message, or the dedicated signaling, etc.;
Operation 1, an RRC connection is established between the MD and the eNB;
Operation 2, the eNB transmits transmission resource configuration information of a D2D signal to the MD in dedicated signaling upon reception of a D2D signal transmission request transmitted by the MD over the RRC connection;
Operation 3, the MD transmits a D2D signal, i.e., a pilot signal, via an air interface according to the obtained transmission resource configuration information;
Operation 4, the SD searches for a pilot signal according to the reception resource configuration information of a D2D signal, determines a discovery of the MD transmitting the pilot signal upon detection of the pilot signal, and provides information carried by the pilot signal to the application layer for use and presentation;
Operation 5, the eNB transmits a D2D resource release instruction to the MD to instruct the MD to release resources over which a D2D signal is transmitted; and
Operation 6, the MD releases the resources over which a D2D signal is transmitted and releases the RRC connection with the eNB.

### Third Embodiment:

In this embodiment, further based on the second embodiment, when the MD transmits a D2D signal, ther MD remains an RRC connection with the network side, and the network side releases resources of the MD, over which a D2D signal is transmitted, by releasing the RRC connection thereof, as illustrated in Fig.6c:
Operation 0, an eNB transmits reception resource configuration information of a D2D signal to an SD in a system broadcast message, or dedicated signaling, etc., and the SD obtains the reception resource configuration information of a D2D signal in the system broadcast message, or the dedicated signaling, etc.;
Operation 1, an RRC connection is established between the MD and the eNB;
Operation 2, the eNB transmits transmission resource configuration information of a D2D signal to the MD in dedicated signaling upon reception of a D2D signal transmission request transmitted by the MD over the RRC connection;
Operation 3, the MD transmits a D2D signal, i.e., a pilot signal, via an air interface according to the obtained transmission resource configuration information;
Operation 4, the SD searches for a pilot signal according to the reception resource configuration information of a D2D signal, determines a discovery of the MD transmitting the pilot signal upon detection of the pilot signal, and provides information carried by the pilot signal to the application layer for use and presentation;
Operation 5, the eNB transmits an RRC connection release instruction to the MD, and the MD releases its resources, over which a D2D signal is transmitted, by releasing the RRC connection.

Fourth Embodiment:

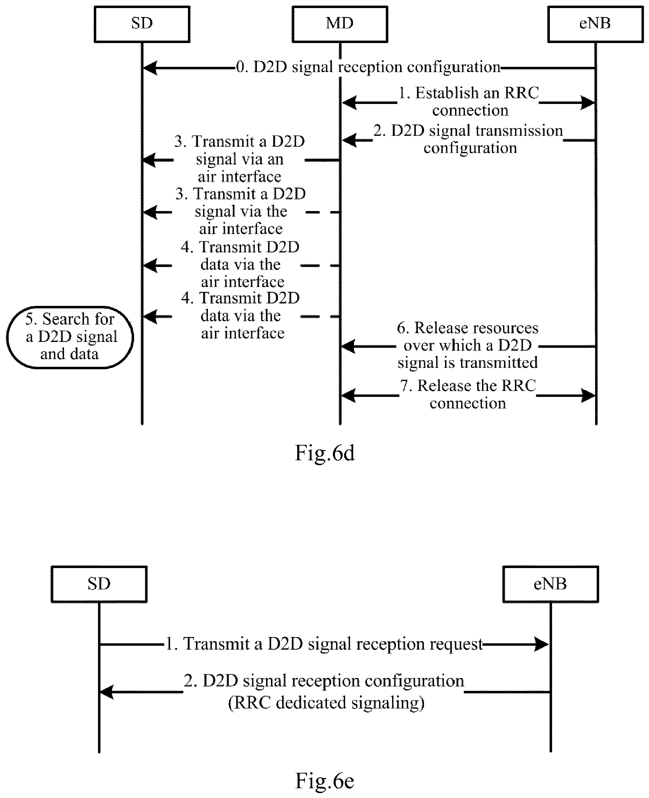

In this embodiment, an MD transmits a D2D signal and related data, and the MD is connected while transmitting the D2D signal and the related data, as illustrated in Fig.6d:
Operation 0, an eNB transmits reception resource configuration information of a D2D signal to an SD in a system broadcast message, or dedicated signaling, etc., and the SD obtains the reception resource configuration information of a D2D signal in the system broadcast message, or the dedicated signaling, etc.;
Operation 1, an RRC connection is established between the MD and the eNB;
Operation 2, the eNB transmits transmission resource configuration information of a D2D signal to the MD in dedicated signaling upon reception of a D2D signal transmission request transmitted by the MD over the RRC connection;
Operation 3, the MD transmits a D2D signal via an air interface according to the obtained transmission resource configuration information;
Operation 4, the MD transmits D2D data via the air interface according to the obtained transmission resource configuration information, the D2D signal enables the SD to discover the MD, and the D2D data includes particular communication contents;
Operation 5, the SD searches for a D2D signal and D2D data according to the reception resource configuration information of a D2D signal, determines a discovery of the MD transmitting the D2D signal and the D2D data upon detection of the D2D signal and the D2D data, and provides the D2D data to the application layer for use and presentation;
Operation 6, the eNB transmits a D2D resource release instruction to the MD to instruct the MD to release resources over which a D2D signal is transmitted; and
Operation 7, the MD releases the resources over which a D2D signal is transmitted and releases the RRC connection with the eNB.

### Fifth Embodiment:

In this embodiment, an SD can be configured with resources, over which a D2D signal is received, particularly in the following two approaches:
In a first approach, the resources are configured in RRC dedicated signaling (when the SD searches for a D2D signal, the SD can be idle or connected) as illustrated in Fig.6e:
   Operation 1, the SD transmits a D2D signal reception request to an eNB when the SD has a need to receive a D2D signal; and
   Operation 2, the eNB transmits reception resource configuration information of a D2D signal, to be detected, to the SD in dedicated signaling according to related information.

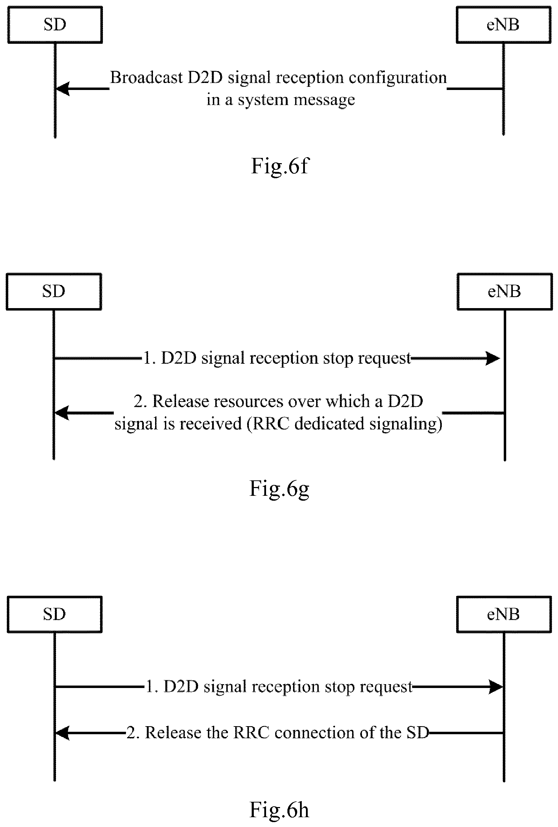

In a second approach, the resources are configured in a system broadcast message, as illustrated in Fig.6f:
The eNB broadcasts transmission resource configuration information of a D2D signal, allocated in the current cell, in a system broadcast message, and the SD fetches transmission resource configuration information of a D2D signal from the system broadcast message; and
When the SD has a need to receive a D2D signal, the SD searches for a D2D signal according to the fetched transmission resource configuration information of a D2D signal.

### Sixth Embodiment:

This embodiment describes a scheme of an SD to release resources over which a D2D signal is received in the following four approaches:
In a first approach, the resources are released in RRC dedicated signaling as illustrated in Fig.6g:
   Operation 1, the SD transmits a request to an eNB to stop a D2D signal from being received when the SD has no need to receive a D2D signal; and

Operation 2, the eNB transmits a D2D resource release instruction to the SD in RRC dedicated signaling to instruct the SD to release resources over which a D2D signal is received.

In a second approach, resources over which a D2D signal is received are released by releasing an RRC connection of UE as illustrated in Fig.6h:
Operation 1, the SD transmits a request to an eNB to stop a D2D signal from being received when the SD has no need to receive a D2D signal; and
Operation 2, the eNB transmits an RRC connection release instruction to the SD to instruct the SD to release an RRC connection.

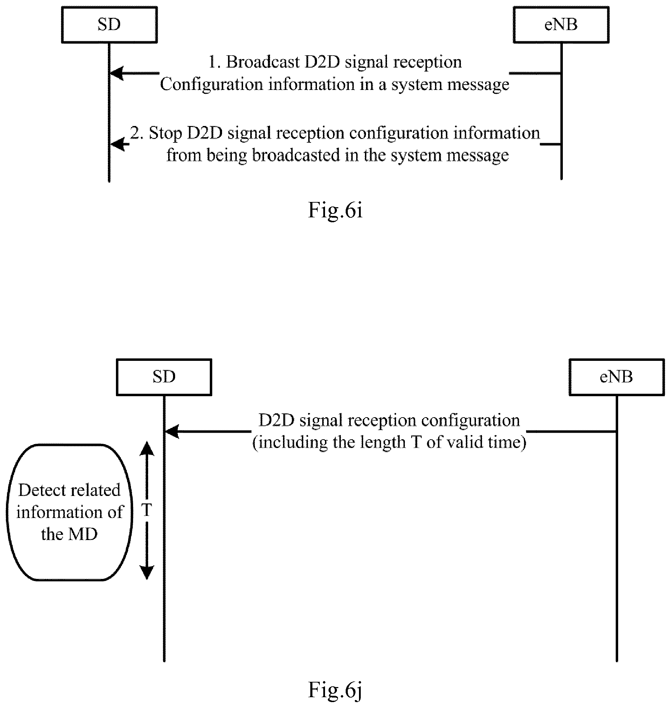

In a third approach, the resources are released in a system broadcast message as illustrated in Fig.6i:
Operation 1, an eNB broadcasts configuration information of resources, over which a D2D signal is received, allocated in the current cell to the SD in a system broadcast message; and
Operation 2, the eNB stops broadcasting the configuration information of the resources, over which a D2D signal is received, in the system broadcast message when the D2D signal is stopped from being transmitted in the cell.

In a fourth approach, the resources are released based upon the length of a valid time period of configuration information allocated for the SD, as illustrated in Fig.6j:
The SD receives reception resource configuration information of a D2D signal, including the length T of a valid time period of the configuration information; and
The SD determines that the reception resource configuration information is valid for the time period T since the configuration information is received, that is, the SD searches for a D2D signal according to the configuration information and releases actively the resources, over which a D2D signal is received, after the time period T expires.

### Seventh Embodiment:

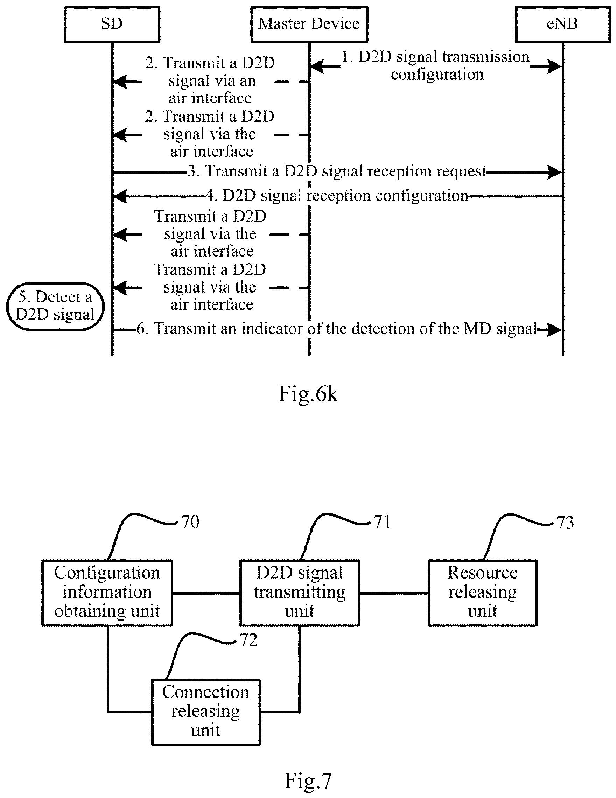

In this embodiment, the SD notifies the network side upon reception of a D2D signal transmitted by an MD as illustrated in Fig.6k:
Operation 1, an eNB transmits transmission resource configuration information of a D2D signal to an MD in dedicated signaling after an RRC connection is established between the MD and the eNB;
Operation 2, the MD transmits a D2D signal via an air interface according to the obtained transmission resource configuration information;
Operation 3, the SD transmits a D2D signal reception request to the eNB;
Operation 4, the eNB transmits reception resource configuration information of a D2D signal to the SD in dedicated signaling;
Operation 5, the SD searches for a D2D signal according to the reception resource configuration information of a D2D signal, determines a discovery of the MD transmitting the D2D signal upon detection of the D2D signal, and provides the D2D data to the application layer for use and presentation; and
Operation 6, the SD transmits an indicator of the detection of the D2D signal transmitted by the MD to the eNB.

Referring to Fig.7, a UE according to an embodiment of the invention includes:
A configuration information obtaining unit 70 is configured to obtain transmission resource configuration information of a Device to Device (D2D) signal from the network side after a Radio Resource Control (RRC) connection is established with the network side; and
A D2D signal transmitting unit 71 is configured to transmit a D2D signal according to the transmission resource configuration information.

Furthermore the configuration information obtaining unit 70 is configured:
To receive the transmission resource configuration information, of a D2D signal, transmitted by the network side in dedicated signaling; or
To transmit a D2D signal transmission request to the network side and to receive the transmission resource configuration information, of a D2D signal, transmitted by the network side in dedicated signaling.

Furthermore the transmission resource configuration information includes at least one of:
Transmission resource location information, a transmit power parameter, a transmission period parameter, a parameter of a number of retransmissions, modulation and coding parameters, and valid range information of configuration information.

Furthermore the D2D signal transmitting unit 71 is configured:
To generate a D2D signal to be transmitted and to transmit the generated D2D signal according to the transmission resource configuration information; or
To receive a D2D signal transmitted by the network side and to transmit the received D2D signal according to the transmission resource configuration information.

Furthermore the D2D signal includes:
A specific sequence of an air interface and/or a D2D special identifier of the first UE.

Furthermore the D2D special identifier includes identity information of the first UE and/or service information provided by the first UE.

Furthermore the UE further includes:
A connection releasing unit 72 is configured to release an RRC connection with the network side after the UE obtains the transmission resource configuration information of a D2D signal from the network side and before the UE transmits the D2D signal according to the transmission resource configuration information.

Furthermore the UE further includes:
A resource releasing unit 73 is configured to release resources, over which a D2D signal is transmitted, after the D2D signal is transmitted according to the transmission resource configuration information.

Furthermore the resource releasing unit 73 is configured:
To release the resources, over which a D2D signal is transmitted, upon reception of a D2D resource release instruction or an RRC connection release instruction transmitted by the network side; or
To transmit a request to the network side to stop the D2D signal from being transmitted and to release the resources, over which a D2D signal is transmitted, upon reception of a D2D resource release instruction or an RRC connection release instruction transmitted by the network side; or
To release the resources, over which a D2D signal is transmitted, after a period of time T elapses since the transmission resource configuration information is received, where T represents the length of valid time of the configuration information included in the transmission resource configuration information.

Furthermore the resource releasing unit 73 is further configured to establish an RRC connection with the network side, if the UE is idle, before releasing the resources over which a D2D signal is transmitted.

Furthermore the D2D signal transmitting unit 70 is further configured:
If the UE is switched to a new cell during transmitting a D2D signal and is idle or connected while transmitting the D2D signal, to judge whether the new cell belongs to a valid area, where the obtained transmission resource configuration information is applicable, after being switched to the new cell, and if so, to continue with transmitting the D2D signal according to the transmission resource configuration information; otherwise, to stop the D2D signal from being transmitted; or
If the UE is switched to a new cell while transmitting a D2D signal and is connected while transmitting the D2D signal, to continue with transmitting the D2D signal according to new transmission resource configuration information carried in a handover command received in the handover procedure after being switched to the new cell.

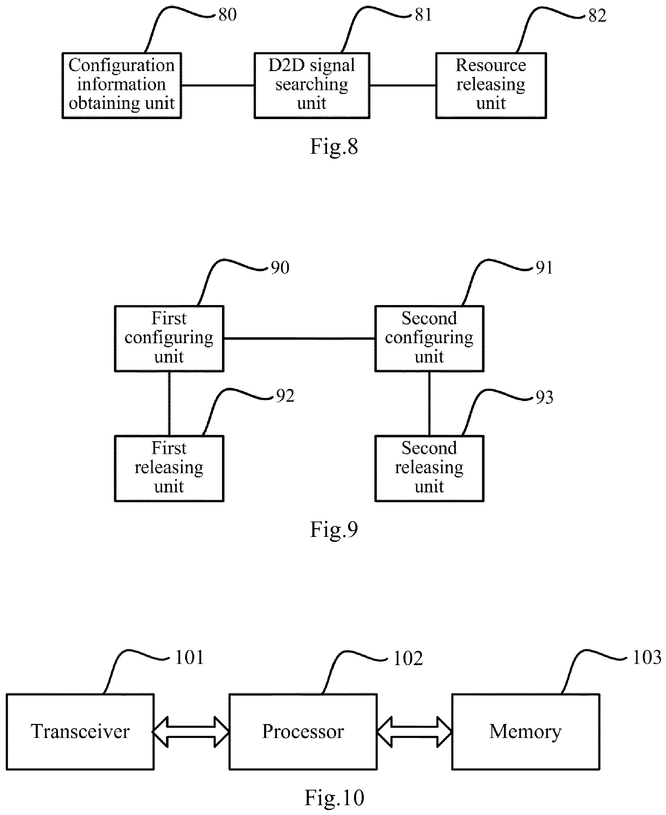

Referring to Fig.8, another UE according to an embodiment of the invention includes:
A configuration information obtaining unit 80 is configured to obtain reception resource configuration information of a D2D signal from the network side; and
A D2D signal searching unit 81 is configured to search for a D2D signal according to the reception resource configuration information and to determine a discovery of a first UE transmitting the D2D signal upon detection of the D2D signal.

Furthermore the configuration information obtaining unit 80 is configured:
To transmit a D2D signal reception request to the network side and to receive the reception resource configuration information, of a D2D signal, transmitted by the network side in dedicated signaling; or
To fetch the reception resource configuration information of a D2D signal from a system broadcast message transmitted by the network side.

Furthermore the reception resource configuration information includes at least one of:
Reception resource location information, modulation and coding parameters, and valid range information of configuration information.
Furthermore the D2D signal searching unit 81 is further configured, upon determining the discovery of the first UE transmitting the D2D signal,

To fetch related information of the first UE from the detected D2D signal;
And/or
To transmit an indicator of the detection of the D2D signal of the first UE to the network side.

Furthermore the UE further includes:
A resource releasing unit 82 is configured to release resources, over which a D2D signal is received, after determining the discovery of the first UE transmitting the D2D signal.

Furthermore the resource releasing unit 82 is configured:
To release the resources, over which a D2D signal is received, upon reception of a D2D resource release instruction or an RRC connection release instruction transmitted by the network side in dedicated signaling; or
To transmit a request to the network side to stop the D2D signal from being received and to release the resources, over which a D2D signal is received, upon reception of a D2D resource release instruction or an RRC connection release instruction transmitted by the network side in dedicated signaling; or
To release the resources, over which a D2D signal is received, upon detecting no reception resource configuration information carried in a system broadcast message; or
To release the resources, over which a D2D signal is received, after a period of time T since the reception resource configuration information is received, where T represents the length of valid time of the configuration information included in the reception resource configuration information.

Furthermore a set of resources, over which a D2D signal is received, indicated by the reception resource configuration information, is a set of resources, over which a D2D signal is transmitted, allocated by the network side or a subset thereof.

Referring to Fig.9, a base station according to an embodiment of the invention includes:
A first configuring unit 90 is configured to transmit transmission resource configuration information of a Device to Device (D2D) signal to a first UE after the first UE establishes a Radio Resource Control (RRC) connection with the network side, so that the first UE transmits a D2D signal according to the transmission resource configuration information; and
A second configuring unit 91 is configured to transmit reception resource configuration information of a D2D signal to a second UE, so that the second UE searches for a D2D signal transmitted by the first UE according to the reception resource configuration information.

Furthermore the first configuring unit 90 is configured:
To transmit actively the transmission resource configuration information of a D2D signal to the first UE in dedicated signaling; or
To transmit the transmission resource configuration information of a D2D signal to the first UE in dedicated signaling upon reception of a D2D signal transmission request transmitted by the first UE.

Furthermore the transmission resource configuration information includes at least one of:
Transmission resource location information, a transmit power parameter, a transmission period parameter, a parameter of a number of retransmissions, modulation and coding parameters, and valid range information of configuration information.
Furthermore the first configuring unit 90 is further configured to transmit to the first UE a D2D signal to be transmitted by the first UE after the transmission resource configuration information of a D2D signal is transmitted to the first UE.

Furthermore the base station further includes:
A first releasing unit 92 is configured, after the transmission resource configuration information of a D2D signal is transmitted to the first UE, to transmit actively a D2D resource release instruction or an RRC connection release instruction to the first UE, to instruct the first UE to release resources over which a D2D signal is transmitted; or
To transmit a D2D resource release instruction or an RRC connection release instruction to the first UE, upon reception of a request transmitted by the first UE to stop the D2D signal from being transmitted, to instruct the first UE to release resources over which a D2D signal is transmitted.

Furthermore the first configuring unit 90 is configured:
After the transmission resource configuration information of a D2D signal is transmitted to the first UE, if the first UE is switched to a new cell and the first UE is currently connected, to transmit new transmission resource configuration information to the first UE in a handover command in the handover procedure of the first UE, so that the first UE continues with transmitting a D2D signal according to the new transmission resource configuration information.

Furthermore the second configuring unit 92 is configured:
To transmit the reception resource configuration information of a D2D signal to the second UE in dedicated signaling upon reception of a D2D signal reception request transmitted by the second UE; or
To transmit the reception resource configuration information of a D2D signal to the second UE in a system broadcast message.

Furthermore the reception resource configuration information includes at least one of:
Reception resource location information, modulation and coding parameters, and valid range information of configuration information.

Furthermore the base station further includes:
A second releasing unit 93 is configured, after the reception resource configuration information of a D2D signal is transmitted to the second UE, to transmit actively a D2D resource release instruction or an RRC connection release instruction to the second UE in dedicated signaling to instruct the second UE to release resources over which a D2D signal is received; or
To transmit a D2D resource release instruction or an RRC connection release instruction to the second UE in dedicated signaling, upon reception of a request transmitted by the second UE to stop the D2D signal from being received, to instruct the second UE to release resources over which a D2D signal is received.

Furthermore a set of resources, over which a D2D signal is received, indicated by the reception resource configuration information, is a set of resources, over which a D2D signal is transmitted, allocated by the network side or a subset thereof.

Referring to Fig. 10 illustrating a UE according to another embodiment of the invention, the UE is configured to transmit a D2D signal, so that such UE can be discovered by another UE. The UE can include a transceiver 101, a processor 102 and a memory 103:
The processor 102 is configured to obtain transmission resource configuration information of a Device to Device (D2D) signal from the network side through the transceiver 101 after the UE establishes an RRC connection with the network side; to store the transmission resource configuration information of a D2D signal in the memory 103; and to transmit a D2D signal through the transceiver 101 according to the transmission resource configuration information stored in the memory 103.

Particularly the transceiver 101 can receive dedicated signaling transmitted by the network side, and the processor 102 can obtain the transmission resource configuration information of a D2D signal from the dedicated signaling received by the transceiver 101; or the transceiver 101 can receive dedicated signaling transmitted by the network side, and the processor 102 can transmit a D2D signal transmission request to the network side through the transceiver 101 and obtain the transmission resource configuration information of a D2D signal from the dedicated signaling received by the transceiver 101.

Particularly the processor 102 can generate a D2D signal to be transmitted and transmit the generated D2D signal through the transceiver 101 according to the transmission resource configuration information; or the processor 102 can receive a D2D signal transmitted in advance by the network side through the transceiver 101 and transmit the received D2D signal through the transceiver 101 according to the transmission resource configuration information.

Where the D2D signal includes a specific sequence of an air interface and/or a D2D special identifier of the first UE, and the D2D special identifier includes identity information of the first UE and/or service information provided by the first UE.

Furthermore the processor 102 can further release an RRC connection with the network side after the transmission resource configuration information of a D2D signal is obtained from the network side and before the D2D signal is transmitted according to the transmission resource configuration information.

Furthermore the processor 102 can further release resources, over which a D2D signal is transmitted, after the D2D signal is transmitted according to the transmission resource configuration information. Particularly the processor 102 is configured to release the resources, over which a D2D signal is transmitted, upon reception through the transceiver 101 of a D2D resource release instruction or an RRC connection release instruction transmitted by the network side; or to transmit a request to the network side through the transceiver 101 to stop the D2D signal from being transmitted and to release the resources, over which a D2D signal is transmitted, upon reception through the transceiver 101 of a D2D resource release instruction or an RRC connection release instruction transmitted by the network side; or to release the resources, over which a D2D signal is transmitted, after a period of time T elapses since the transmission resource configuration information is received through the transceiver 101, T represents the length of valid time of the configuration information included in the transmission resource configuration information.

Furthermore the processor 102 can be further configured, if the UE is switched to a new cell during the transceiver 101 transmits a D2D signal, and the UE is idle or connected while the transceiver 101 transmits the D2D signal, to judge whether the new cell belongs to a valid area, where the obtained transmission resource configuration information is applicable, after being switched to the new cell, and if so, to continue with transmitting a D2D signal through the transceiver 101 according to the transmission resource configuration information; otherwise, to stop the D2D signal from being transmitted through the transceiver 101; or if the UE is switched to a new cell during the transceiver 101 transmits a D2D signal, and the UE is connected while the transceiver 101 transmits the D2D signal, to continue with transmitting a D2D signal through the transceiver 101 according to new transmission resource configuration information carried in a handover command received in the handover procedure after being switched to the new cell.

In the UE above, the transmission resource configuration information includes at least one of transmission resource location information, a transmit power parameter, a transmission period parameter, a parameter of a number of retransmissions, modulation and coding parameters, and valid range information of configuration information.

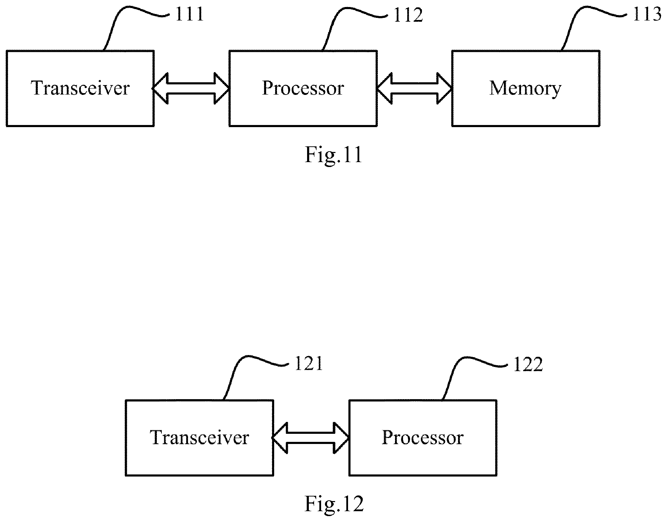

Referring to Fig.11 illustrating a UE according to another embodiment of the invention, the UE is configured to discover a D2D signal, and the UE can include a transceiver 111, a processor 112 and a memory 113:
The processor 112 is configured to obtain reception resource configuration information of a D2D signal from the network side through the transceiver 111; to store the obtained reception resource configuration information in the memory 113; and to search for a D2D signal through the transceiver 111 according to the reception resource configuration information stored in the memory 113 and to determine a discovery of a first UE transmitting the D2D signal upon detection of the D2D signal.

Particularly the processor 112 can transmit a D2D signal reception request to the network side through the transceiver 111, to receive dedicated signaling transmitted by the network side through the transceiver 111, and to obtain the reception resource configuration information, of a D2D signal from the dedicated signaling; or the processor 112 can receive a system broadcast message from the network side through the transceiver 111 and to fetch the reception resource configuration information of a D2D signal from the currently received system broadcast message.

Particularly the processor 112 can fetch related information of the first UE from the D2D signal detected by the transceiver 111, and/or to transmit an indicator of the detection of the D2D signal of the first UE to the network side through the transceiver 111, upon determining the discovery of the first UE transmitting the D2D signal.

Furthermore the processor 112 can release resources, over which a D2D signal is received, after determining the discovery of the first UE transmitting the D2D signal. Particularly the processor 112 can receive dedicated signaling transmitted by the network side through the transceiver 111 and to release the resources, over which a D2D signal is received, upon reception of a D2D resource release instruction or an RRC connection release instruction from the currently received dedicated signaling; or to transmit a request to the network side through the transceiver 111 to stop the D2D signal from being received and to release the resources, over which a D2D signal is received, upon reception through the transceiver 111 of a D2D resource release instruction or an RRC connection release instruction transmitted by the network side in dedicated signaling; or to release the resources, over which a D2D signal is received, upon detecting no reception resource configuration information carried in a system broadcast message received through the transceiver 111; or to release the resources, over which a D2D signal is received, after a period of time T since the reception resource configuration information is received through the transceiver 111, T represents the length of valid time of the configuration information included in the reception resource configuration information.

A set of resources, over which a D2D signal is received, indicated by the reception resource configuration information, is a set of resources, over which a D2D signal is transmitted, allocated by the network side or a subset thereof.

In the UE above, the reception resource configuration information includes at least one of reception resource location information, modulation and coding parameters, and valid range information of configuration information.

Referring to Fig.12 illustrating a base station according to an embodiment of the invention, the base station includes a transceiver 121 and a processor 122. The processor 122 is configured to transmit transmission resource configuration information of a Device to Device (D2D) signal to a first UE through the transceiver 121 after the first UE establishes an RRC connection with the network side, so that the first UE transmits a D2D signal according to the transmission resource configuration information; and to transmit reception resource configuration information of a D2D signal to a second UE through the transceiver 121, so that the second UE searches for a D2D signal transmitted by the first UE according to the reception resource configuration information.

Particularly the processor 122 can transmit actively the transmission resource configuration information of a D2D signal to the first UE in dedicated signaling through the transceiver 121; or to transmit the transmission resource configuration information of a D2D signal to the first UE in dedicated signaling through the transceiver 121upon reception through the transceiver 121 of a D2D signal transmission request transmitted by the first UE.

Furthermore the processor 122 can further transmit to the first UE through the transceiver 121 a D2D signal to be transmitted by the first UE after the transmission resource configuration information of a D2D signal is transmitted to the first UE through the transceiver 121.

Furthermore the processor 122 can further transmit actively a D2D resource release instruction or an RRC connection release instruction to the first UE through the transceiver 121, after the transmission resource configuration information of a D2D signal is transmitted to the first UE through the transceiver 121, to instruct the first UE to release resources over which a D2D signal is transmitted; or to transmit a D2D resource release instruction or an RRC connection release instruction to the first UE through the transceiver 121, upon reception through the transceiver 121 of a request transmitted by the first UE to stop the D2D signal from being transmitted, to instruct the first UE to release resources over which a D2D signal is transmitted.

Furthermore after the transmission resource configuration information of a D2D signal is transmitted to the first UE through the transceiver 121, if the first UE is switched to a new cell and the first UE is currently connected, then the processor 122 can further transmit new transmission resource configuration information to the first UE in a handover command through the transceiver 121 in the handover procedure of the first UE, so that the first UE continues with transmitting a D2D signal according to the new transmission resource configuration information.

Particularly the processor 122 can further transmit the reception resource configuration information of a D2D signal to the second UE in dedicated signaling through the transceiver 121 upon reception through the transceiver 121 of a D2D signal reception request transmitted by the second UE; or to transmit the reception resource configuration information of a D2D signal to the second UE in a system broadcast message through the transceiver 121.

Furthermore the processor 122 can further transmit actively a D2D resource release instruction or an RRC connection release instruction to the second UE in dedicated signaling through the transceiver 121, after the reception resource configuration information of a D2D signal is transmitted to the second UE through the transceiver 121, to instruct the second UE to release resources over which a D2D signal is received; or to transmit actively a D2D resource release instruction or an RRC connection release instruction to the second UE through the transceiver 121 in dedicated signaling, upon reception through the transceiver 121 of a request transmitted by the second UE to stop the D2D signal from being received, to instruct the second UE to release resources over which a D2D signal is received.

In the terminal above, a set of resources, over which a D2D signal is received, indicated by the reception resource configuration information, is a set of resources, over which a D2D signal is transmitted, allocated by the network side or a subset thereof.

In the terminal above, the transmission resource configuration information includes at least one of transmission resource location information, a transmit power parameter, a transmission period parameter, a parameter of a number of retransmissions, modulation and coding parameters, and valid range information of configuration information.

In the terminal above, the reception resource configuration information includes at least one of reception resource location information, modulation and coding parameters, and valid range information of configuration information.

In summary, the invention has the following advantageous effects:
In the solution according to the embodiments of the invention, the first UE transmits a D2D signal according to the transmission resource configuration information, of a D2D signal, obtained from the network side, and the second UE searches for a D2D signal according to the reception resource information, of a D2D signal, obtained from the network side and determines a discovery of the corresponding first UE upon detection of the D2D signal. As can be apparent, in this solution, a UE to be discovered, i.e., the first UE, transmits a D2D signal, a UE needing to discover another UE, i.e., the second UE, discovers the first UE by searching for a D2D signal, which addresses the problem of how to discover each other between the UEs.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

## Claims

1. A method for transmitting a signal, wherein the method comprises:
obtaining (30), by a first UE, transmission resource configuration information of a Device to Device, D2D, signal from a network side after establishing a Radio Resource Control, RRC, connection with the network side; and
transmitting (31), by the first UE, the D2D signal according to the transmission resource configuration information;
the method further comprises:
if the first UE is switched to a new cell during transmitting a D2D signal and the first UE is idle or connected while transmitting the D2D signal, then judging, by the first UE, whether the new cell belongs to a valid area, where the obtained transmission resource configuration information is applicable, after being switched to the new cell, and if so, then continuing with transmitting the D2D signal according to the transmission resource configuration information; otherwise, stopping the D2D signal from being transmitted; or
if the first UE is switched to a new cell during transmitting a D2D signal and first UE is connected while transmitting the D2D signal, then continuing, by the first UE, with transmitting the D2D signal according to new transmission resource configuration information carried in a handover command received in a handover procedure after being switched to the new cell.

2. The method according to claim 1, wherein obtaining transmission resource configuration information of a D2D signal from the network side comprises:
receiving, by the first UE, the transmission resource configuration information, of a D2D signal, transmitted by the network side in dedicated signaling; or
transmitting, by the first UE, a D2D signal transmission request to the network side and receiving the transmission resource configuration information, of a D2D signal, transmitted by the network side in dedicated signaling.

3. The method according to claim 1, wherein transmitting, by the first UE, the D2D signal according to the transmission resource configuration information comprises:
generating, by the first UE, a D2D signal to be transmitted and transmitting the generated D2D signal according to the transmission resource configuration information; or
receiving, by the first UE, a D2D signal transmitted in advance by the network side and transmitting the received D2D signal according to the transmission resource configuration information.

4. The method according to claim 3, wherein the D2D signal comprises:
a specific sequence of an air interface and/or a D2D special identifier of the first UE; the D2D special identifier comprises identity information of the first UE and/or service information provided by the first UE.

5. The method according to claim 1, wherein after the first UE transmits the D2D signal according to the transmission resource configuration information, the method further comprises:
releasing, by the first UE, resources over which the D2D signal is transmitted.
releasing, by the first UE, the resources over which the D2D signal is transmitted comprises:
releasing, by the first UE, the resources over which a D2D signal is transmitted, upon reception of a D2D resource release instruction or an RRC connection release instruction transmitted by the network side; or
transmitting, by the first UE, a request to the network side to stop the D2D signal from being transmitted and releasing the resources, over which a D2D signal is transmitted, upon reception of a D2D resource release instruction or an RRC connection release instruction transmitted by the network side; or
releasing, by the first UE, the resources, over which a D2D signal is transmitted, after a period of time T elapses since the transmission resource configuration information is received, wherein T represents the length of valid time of the configuration information comprised in the transmission resource configuration information.

6. The method according to any one of claims 1 to 5, wherein the transmission resource configuration information comprises at least one of:
transmission resource location information, a transmit power parameter, a transmission period parameter, a parameter of a number of retransmissions, modulation and coding parameters, and valid range information of configuration information.

7. A UE, comprising:
a configuration information obtaining unit (70) configured to obtain transmission resource configuration information of a Device to Device, D2D, signal from a network side after a Radio Resource Control, RRC, connection is established with the network side; and
a D2D signal transmitting unit (71) configured to transmit the D2D signal according to the transmission resource configuration information;
wherein the D2D signal transmitting unit is further configured:
if the UE is switched to a new cell during transmitting a D2D signal and the UE is idle or connected while transmitting the D2D signal, then to judge whether the new cell belongs to a valid area, where the obtained transmission resource configuration information is applicable, after being switched to the new cell, and if so, then to continue with transmitting the D2D signal according to the transmission resource configuration information; otherwise, to stop the D2D signal from being transmitted; or
if the UE is switched to a new cell during transmitting a D2D signal and UE is connected while transmitting the D2D signal, then to continue with transmitting the D2D signal according to new transmission resource configuration information carried in a handover command received in a handover procedure after being switched to the new cell.

## Patentansprüche

1. Verfahren zum Senden eines Signals, wobei das Verfahren Folgendes umfasst:
Erhalten (30), durch ein erstes User Equipment UE (Benutzer Endgerät), von Übertragungsquellen-Konfigurationsinformationen eines Device-to-Device-, D2D, Gerät-zu-Gerät, Signals von einer Netzseite, nachdem eine Radio Resource Control-, RRC, Funkressourcensteuerung, Verbindung mit der Netzseite hergestellt wird; und
Senden (31), durch das erste UE, des D2D Signals gemäß den Übertragungsquellen-Konfigurationsinformationen;
und das Verfahren weiterhin Folgendes umfasst:
wenn das erste UE während des Sendens eines D2D Signals auf eine neue Funkzelle geschaltet wird und das erste UE frei oder verbunden ist, während das D2D Signal gesendet wird, Beurteilen, durch das erste UE, ob die neue Funkzelle zu einem gültigen Bereich gehört, in dem die erhaltenen Übertragungsquellen-Konfigurationsinformationen nach dem Schalten auf die neue Funkzelle anwendbar sind, und wenn ja, Fortfahren mit dem Senden des D2D Signals gemäß den Übertragungsquellen-Konfigurationsinformationen; andernfalls Beenden des Sendens des D2D Signals; oder
wenn das erste UE während des Sendens eines D2D Signals auf eine neue Funkzelle geschaltet wird und das erste UE während des Sendens des D2D Signals verbunden ist, Fortfahren, durch das erste UE, mit dem Senden des D2D Signals gemäß neuen Übertragungsquellen-Konfigurationsinformationen, die in einem Übergabebefehl übertragen werden, welcher nach dem Schalten auf die neue Funkzelle in einem Übergabevorgang empfangen wird.

2. Verfahren nach Anspruch 1, wobei das Erhalten von Übertragungsquellen-Konfigurationsinformationen eines D2D Signals von der Netzseite Folgendes umfasst:
Empfangen, durch das erste UE, der Übertragungsquellen-Konfigurationsinformationen eines D2D Signals, das von der Netzseite in zugehörige Signalgebung übertragen wird; oder
Senden, durch das erste UE, einer D2D Signalübertragungsanforderung an die Netzseite und Empfangen der Übertragungsquellen-Konfigurationsinformationen eines D2D Signals, das von der Netzseite in zugehörige Signalgebung übertragen wird.

3. Verfahren nach Anspruch 1, wobei das Senden, durch das erste UE, des D2D Signals gemäß den Übertragungsquellen-Konfigurationsinformationen Folgendes umfasst:
Erzeugen, durch das erste UE, eines zu sendenden D2D Signals und Senden des erzeugten D2D Signals gemäß den Übertragungsquellen-Konfigurationsinformationen; oder
Empfangen, durch das erste UE, eines zuvor durch die Netzseite gesendeten D2D Signals und Senden des empfangenen D2D Signals gemäß den Übertragungsquellen-Konfigurationsinformationen.

4. Verfahren nach Anspruch 3, wobei das D2D Signal Folgendes umfasst:
eine bestimmte Sequenz einer Luftschnittstelle und/oder einer speziellen D2D Kennung des ersten UE;
wobei die spezielle D2D Kennung Erkennungsinformationen des ersten UE und/oder von dem ersten UE bereitgestellte Serviceinformationen umfasst.

5. Verfahren nach Anspruch 1, wobei, nachdem das erste UE das D2D Signal gemäß den Übertragungsquellen-Konfigurationsinformationen überträgt, das Verfahren weiterhin Folgendes umfasst:
Freigeben, durch das erste UE, von Quellen, über welche das D2D Signal gesendet wird,
wobei Freigeben, durch das erste UE, der Quellen, über welche das D2D Signal gesendet wird, umfasst:
Freigeben, durch das erste UE, der Quellen, über welche ein D2D Signal gesendet wird, nach Empfang einer D2D-Ressourcenfreigabeanweisung oder einer von der Netzseite gesendeten RRC-Verbindungsfreigabeanweisung; oder
Senden, durch das erste UE, einer Anforderung an die Netzseite, um die Sendung des D2D Signals zu beenden, und Freigeben der Quellen, über welche ein D2D Signal gesendet wird, nach Empfang einer D2D-Ressourcenfreigabeanweisung oder einer von der Netzseite übertragenen RRC-Verbindungsfreigabeanweisung; oder
Freigeben, durch das erste UE, der Ressourcen, über welche ein D2D Signal gesendet wird, nachdem eine Zeitspanne T abläuft, seitdem die Übertragungsquellen-Konfigurationsinformationen empfangen werden, wobei T die Länge von gültiger Zeit der Konfigurationsinformationen darstellt, die in den Übertragungsquellen-Konfigurationsinformationen enthalten ist.

6. Verfahren nach einem der Ansprüche 1 bis 5, wobei die Übertragungsquellen-Konfigurationsinformationen mindestens eine der folgenden umfassen:
Übertragungsquellen-Positionsinformationen, einen Sendeleistungsparameter, einen Sendedauerparameter, einen Parameter einer Anzahl von erneuten Sendungen, Modulations- und Codierungsparameter sowie Informationen eines gültigen Bereiches von Konfigurationsinformationen.

7. UE mit:
einer Einheit (70) zum Erhalten von Konfigurationsinformationen, die zum Erhalten von Übertragungsquellen-Konfigurationsinformationen eines Device-to-Device-, D2D, Gerät-zu-Gerät, Signals von einer Netzseite konfiguriert ist, nachdem eine Funkressourcensteuerungs-, RRC, Verbindung mit der Netzseite hergestellt wird; und
einer D2D Signalübertragungseinheit (71), die zum Senden des D2D Signals gemäß den Übertragungsquellen-Konfigurationsinformationen konfiguriert ist;
wobei die D2D Signalübertragungseinheit weiterhin dazu konfiguriert ist:
wenn das UE während des Sendens eines D2D Signals auf eine neue Funkzelle geschaltet wird und das UE während der Sendung des D2D Signals frei oder verbunden ist, zu beurteilen, ob die neue Funkzelle zu einem gültigen Bereich gehört, in dem die erhaltenen Übertragungsquellen-Konfigurationsinformationen anwendbar sind, nachdem auf die neue Funkzelle geschaltet wird, und wenn ja, mit dem Senden des D2D Signals gemäß den Übertragungsquellen-Konfigurationsinformationen fortzufahren; andernfalls das Senden des D2D Signals zu beenden; oder,
wenn das UE während des Sendens eines D2D Signals auf eine neue Funkzelle geschaltet wird und das UE während des Sendens des D2D Signals verbunden ist, mit dem Senden des D2D Signals gemäß neuen Übertragungsquellen-Konfigurationsinformationen fortzufahren, die in einem Übergabebefehl übertragen werden, welcher in einem Übergabevorgang nach dem Schalten auf die neue Funkzelle empfangen wird.

## Revendications

1. Procédé de transmission d'un signal, qui comprend :
l'obtention (30), par un premier équipement utilisateur, d'informations de configuration de ressources de transmission d'un signal de dispositif à dispositif, D2D, depuis un côté réseau après avoir établi une connexion RRC (contrôle des ressources radio) avec le côté réseau ; et
la transmission (31), par le premier équipement utilisateur, du signal D2D selon les informations de configuration de ressources de transmission ;
le procédé comprenant en outre :
si le premier équipement utilisateur passe à une nouvelle cellule pendant la transmission d'un signal D2D et si le premier équipement utilisateur est inactif ou connecté pendant la transmission du signal D2D, le jugement, par le premier équipement utilisateur, du fait que la nouvelle cellule appartienne à une zone valide ou non, dans laquelle les informations de configuration de ressources de transmission obtenues sont applicables, après le passage à la nouvelle cellule, et, si c'est le cas, la poursuite de la transmission du signal D2D selon les informations de configuration de ressources de transmission ; sinon, l'arrêt de la transmission du signal D2D ; ou
si le premier équipement utilisateur passe à une nouvelle cellule pendant la transmission d'un signal D2D et si le premier équipement utilisateur est connecté pendant la transmission du signal D2D, la poursuite, par le premier équipement utilisateur, de la transmission du signal D2D selon les nouvelles informations de configuration de ressources de transmission acheminées au sein d'une commande de transfert reçue dans le cadre d'une procédure de transfert après le passage à la nouvelle cellule.

2. Procédé selon la revendication 1, dans lequel l'obtention des informations de configuration de ressources de transmission d'un signal D2D de la part du côté réseau comprend :
la réception, par le premier équipement utilisateur, des informations de configuration de ressources de transmission, d'un signal D2D, transmises par le côté réseau dans le cadre d'une signalisation dédiée ; ou
la transmission, par le premier équipement utilisateur, d'une demande de transmission de signal D2D au côté réseau, et la réception des informations de configuration de ressources de transmission d'un signal D2D transmises par le côté réseau dans le cadre d'une signalisation dédiée.

3. Procédé selon la revendication 1, dans laquelle la transmission, par le premier équipement utilisateur, du signal D2D selon les informations de configuration des ressources de transmission comprend :
la génération, par le premier équipement utilisateur, d'un signal D2D à transmettre, et la transmission du signal D2D généré selon les informations de configuration des ressources de transmission ; ou
la réception, par le premier équipement utilisateur, d'un signal D2D transmis à l'avance par le côté réseau, et la transmission du signal D2D reçu selon les informations de configuration des ressources de transmission.

4. Procédé selon la revendication 3, dans lequel le signal D2D comprend :
une séquence spécifique d'une interface radio et/ou un identifiant spécial D2D du premier équipement utilisateur ;
l'identifiant spécial D2D comprend les informations d'identité du premier équipement utilisateur et/ou des informations de service fournies par le premier équipement utilisateur.

5. Procédé selon la revendication 1, dans lequel, une fois que le premier équipement utilisateur a transmis le signal D2D selon les informations de configuration des ressources de transmission, le procédé comprend en outre :
la libération, par le premier équipement utilisateur, des ressources sur lesquelles le signal D2D est transmis ;
la libération, par le premier équipement utilisateur, des ressources sur lesquelles le signal D2D est transmis comprend :
la libération, par le premier équipement utilisateur, des ressources sur lesquelles un signal D2D est transmis, lors de la réception d'une instruction de libération de ressources D2D ou d'une instruction de libération de connexion RRC transmise par le côté réseau ; ou
la transmission, par le premier équipement utilisateur, d'une demande au côté réseau afin d'arrêter la transmission du signal D2D, et de libérer les ressources sur lesquelles un signal D2D est transmis, lors de la réception d'une instruction de libération de ressources D2D ou d'une instruction de libération de connexion RRC transmise par le côté réseau ; ou
la libération, par le premier équipement utilisateur, des ressources sur lesquelles un signal D2D est transmis, après qu'une durée T s'est écoulée depuis la réception des informations de configuration des ressources de transmission, T représentant la durée de validité des informations de configuration comprises dans les informations de configuration des ressources de transmission.

6. Procédé selon l'une quelconque des revendications 1 à 5, dans lequel les informations de configuration des ressources de transmission comprennent au moins l'un :
d'informations de localisation des ressources de transmission, d'un paramètre de puissance de transmission, d'un paramètre de période de transmission, d'un paramètre d'un certain nombre de retransmissions, de paramètres de modulation et de codage, et d'informations de plage de validité des informations de configuration.

7. Équipement utilisateur, qui comprend :
une unité d'obtention d'informations de configuration (70) configurée pour obtenir les informations de configuration de ressources de transmission d'un signal de dispositif à dispositif, D2D, de la part d'un côté réseau après qu'une connexion de contrôle de ressources radio, RRC, a été établie avec le côté réseau ; et
une unité de transmission de signal D2D (71) configurée pour transmettre le signal D2D selon les informations de configuration de ressources de transmission ;
dans lequel l'unité de transmission de signal D2D est en outre configurée :
si l'équipement utilisateur passe à une nouvelle cellule pendant la transmission d'un signal D2D et si l'équipement utilisateur est inactif ou connecté pendant la transmission du signal D2D, pour juger si la nouvelle cellule appartient à une zone valide ou non dans laquelle les informations de configuration des ressources de transmission obtenues sont applicables, après le passage à la nouvelle cellule, et, si c'est le cas, pour poursuivre la transmission du signal D2D selon les informations de configuration de ressources de transmission ; sinon, pour arrêter la transmission du signal D2D ; ou
si l'équipement utilisateur passe à une nouvelle cellule pendant la transmission d'un signal D2D et si l'équipement utilisateur est connecté pendant la transmission du signal D2D, la poursuite de la transmission du signal D2D selon les nouvelles informations de configuration de ressources de transmission acheminées au sein d'une commande de transfert reçue dans le cadre d'une procédure de transfert après le passage à la nouvelle cellule.
